(19) Europäisches Patentamt
European Patent Office
Office européen des brevets

(11) **EP 2 715 607 B1**

(12) **FASCICULE DE BREVET EUROPEEN**

(45) Date de publication et mention de la délivrance du brevet:
**05.06.2019 Bulletin 2019/23**

(21) Numéro de dépôt: **12722431.9**

(22) Date de dépôt: **18.04.2012**

(51) Int Cl.:
***G06K 7/10*** *(2006.01)*

(86) Numéro de dépôt international:
**PCT/FR2012/050844**

(87) Numéro de publication internationale:
**WO 2012/164180 (06.12.2012 Gazette 2012/49)**

(54) **SECURISATION D'UNE COMMUNICATION ENTRE UN TRANSPONDEUR ELECTROMAGNETIQUE ET UN TERMINAL**

SICHERUNG EINER KOMMUNIKATION ZWISCHEN EINEM ELEKTROMAGNETISCHEN TRANSPONDER UND EINEM ENDGERÄT

SECURING A COMMUNICATION BETWEEN AN ELECTROMAGNETIC TRANSPONDER AND A TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.06.2011 FR 1154863**

(43) Date de publication de la demande:
**09.04.2014 Bulletin 2014/15**

(73) Titulaire: **ST Microelectronics (Rousset) SAS 13790 Rousset (FR)**

(72) Inventeur: **WUIDART, Luc F-83910 Pourrieres (FR)**

(74) Mandataire: **Cabinet Beaumont 4, Place Robert Schuman B.P. 1529 38025 Grenoble Cedex 1 (FR)**

(56) Documents cités:
**EP-A1- 1 043 679      EP-A1- 2 077 518 WO-A2-2005/124669      GB-A- 2 464 362**

## Description

### Domaine de l'invention

La présente invention concerne de façon générale les systèmes utilisant des transpondeurs, c'est-à-dire des émetteurs-récepteurs (généralement mobiles) susceptibles de communiquer sans contact et sans fil avec un terminal.

L'invention concerne plus particulièrement la sécurisation d'une communication en champ proche entre un transpondeur et un lecteur.

### Exposé de l'art antérieur

Des systèmes à transpondeurs électromagnétiques sont de plus en plus utilisés avec l'apparition des dispositifs mobiles de télécommunication équipés de routeurs de communication en champ proche (NFC - Near Field Communication). Dans ces dispositifs, l'équipement mobile peut servir à la fois de lecteur de transpondeurs, par exemple de lecteur de carte à puce sans contact, et à l'inverse de transpondeur lui-même pour communiquer en champ proche avec un terminal, par exemple un autre dispositif mobile, une borne d'accès, etc.

On connaît de nombreuses méthodes visant à sécuriser les transactions entre un transpondeur électromagnétique et un lecteur. Ces méthodes ont généralement recours à des systèmes de chiffrement des communications que ce soit par des algorithmes symétriques ou asymétriques.

Tous ces systèmes requièrent que la communication soit établie pour rendre possible la sécurisation de la transaction.

De plus, ces méthodes sont généralement peu efficaces pour empêcher qu'un dispositif pirate simulant un transpondeur n'entame une communication avec un lecteur.

Le document GB-A-2464362 décrit une interface de communication comprenant un gant de lecture RFID.

Le document EP-A-2077518 décrit un système de détection de présence d'un transpondeur par réduction de la fréquence de résonance.

Le document WO2005/124669 A2 décrit un système RFID avec détection de présence des étiquettes RFID.

Le document EP 1 043 679 A1 décrit un système RFID avec détection de présence et mesure de distance entre l'étiquette RFID et le lecteur.

### Résumé

Un objet d'un mode de réalisation de la présente invention est de proposer un mécanisme de sécurisation d'une communication entre un transpondeur électromagnétique et un terminal qui pallie tout ou partie des inconvénients des solutions usuelles.

Un autre objet d'un mode de réalisation de la présente invention est de proposer une solution ne requérant pas l'établissement d'une communication pour détecter la présence éventuelle d'un transpondeur pirate.

Un autre objet d'un mode de réalisation de la présente invention est de proposer une solution compatible avec les processus habituels de chiffrement de communication.

Pour atteindre tout ou partie de ces objets ainsi que d'autres, on prévoit un procédé de sécurisation d'une communication entre un transpondeur électromagnétique et un terminal, dans lequel l'émission d'une requête d'interrogation par le terminal n'est autorisée que lorsque le transpondeur est en contact mécanique ou en quasi contact mécanique avec le terminal, le boîtier incluant une antenne de communication, dans lequel :

a) une première valeur du courant dans un circuit oscillant du terminal est périodiquement mesurée ;
b) une deuxième valeur d'un rapport entre une valeur à vide de ce courant, mémorisée lorsqu'aucun transpondeur n'est dans le champ du terminal, et la première valeur est calculée ;
c) ladite deuxième valeur est comparée à une troisième valeur dudit rapport calculée lors d'une itération précédente ; et
d) tant que les deuxième et troisième valeurs ne sont pas égales, on réitère les étapes a à c.

Selon un mode de réalisation de la présente invention, en cas d'égalité des deuxième et troisième valeurs :

e) la deuxième valeur est comparée à un seuil ;
f) l'envoi d'une requête est autorisé si ce seuil n'est pas atteint ;
g) on revient à l'étape a) si ce seuil est dépassé.

Selon un mode de réalisation de la présente invention, si ledit seuil est atteint, l'envoi de la requête est précédé d'une augmentation de la valeur d'un élément résistif du circuit oscillant si la deuxième valeur est supérieure à 2.

Selon un mode de réalisation de la présente invention, si la deuxième valeur est inférieure à la troisième, on bloque l'émission éventuelle d'une requête.

Selon un mode de réalisation de la présente invention :

l'étape b) est précédée d'une comparaison de la première valeur à la valeur à vide ; et
en cas d'identité, on revient à l'étape a), ou
dans le cas contraire, on passe à l'étape c).

On prévoit également un terminal de communication avec un transpondeur électromagnétique, comportant des moyens adaptés à la mise en oeuvre du procédé.

On prévoit également un téléphone mobile comportant un tel terminal.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 représente, de façon très schématique, un exemple de système de communication en champ proche à transpondeur ;
la figure 2 est un schéma bloc simplifié du terminal de la figure 1 ;
la figure 3 est un schéma bloc simplifié du transpondeur de la figure 1 ;
la figure 4 illustre un exemple d'évolution de la tension aux bornes du circuit résonnant du transpondeur en fonction d'un couplage normalisé ;
la figure 5 illustre l'évolution d'un rapport de courant dans le circuit oscillant du lecteur en fonction du couplage ;
la figure 6 est un organigramme simplifié illustrant un mode de mise en oeuvre du procédé de sécurisation ;
la figure 7 est un schéma bloc illustrant une variante de réalisation d'un terminal ; et
la figure 8 est un schéma bloc partiel illustrant une initialisation d'une communication par un terminal.

Description détaillée

De mêmes éléments ont été désignés par de mêmes références aux différentes figures. Pour des raisons de clarté, seuls les étapes et éléments utiles à la compréhension des modes de réalisation décrits ont été représentés et seront détaillés. En particulier, la provenance et la destination des données transmises lors des communications entre un transpondeur et un terminal n'ont pas été détaillées, les modes de réalisation décrits étant compatibles avec toute communication usuelle.

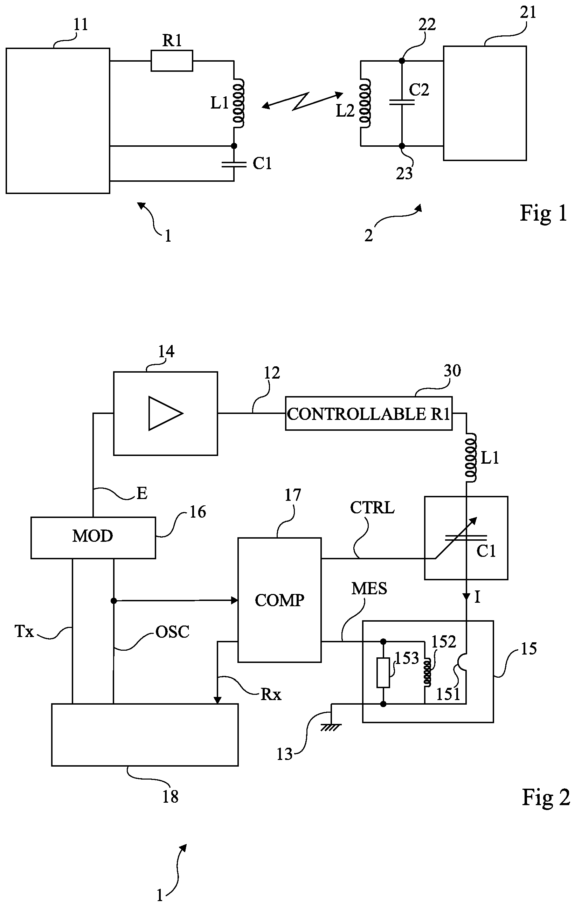

La figure 1 représente, de façon très schématique et simplifiée, un exemple de système de communication et de téléalimentation comportant un terminal 1 ou borne de lecture et/ou d'écriture, et un transpondeur 2.

Généralement, le terminal 1 (par exemple, un téléphone mobile ou smartphone) comporte un circuit oscillant série, formé d'une inductance L1 en série avec un condensateur C1 et une résistance R1. Ce circuit oscillant série est commandé par un dispositif 11 comportant, entre autres et de façon non limitative, un amplificateur ou coupleur d'antenne et un circuit de commande et d'exploitation des transmissions incluant notamment un modulateur/démodulateur et un circuit (généralement un microprocesseur) de traitement des commandes et des données. Le dispositif 11 communique généralement avec différents circuits d'entrée/sortie (clavier, écran, éléments d'échange avec un serveur, etc.) et/ou de traitement non représentés. Les éléments du terminal 1 tirent l'énergie nécessaire à leur fonctionnement d'un circuit d'alimentation (non représenté) raccordé, par exemple, au réseau de distribution électrique ou à une batterie (par exemple, celle d'un véhicule automobile ou d'un téléphone ou ordinateur portable).

Un transpondeur 2 apte à coopérer avec le terminal 1 comporte un circuit oscillant, par exemple parallèle, formé d'une inductance L2 en parallèle avec un condensateur C2 entre deux bornes 22 et 23 d'entrée d'un circuit 21 de commande et de traitement. Les bornes 22 et 23 sont, en pratique, reliées à des bornes d'entrée d'un élément de redressement (non représenté en figure 1) dont des bornes de sortie constituent des bornes d'alimentation des circuits internes au transpondeur. Ces circuits comportent généralement une mémoire et un modulateur pour transmettre des informations au terminal. Selon le type de transpondeur (dépendant de l'application et des tâches qu'il est censé effectuer), ces circuits peuvent également comporter un démodulateur des signaux éventuellement reçus du terminal, un microprocesseur et divers autres circuits de traitement.

Les circuits oscillants du terminal et du transpondeur sont généralement accordés sur une même fréquence correspondant à la fréquence d'un signal d'excitation du circuit oscillant du terminal. Ce signal haute fréquence (par exemple, 13,56 MHz) sert non seulement de porteuse de transmission de données du terminal vers le transpondeur, mais également de porteuse de téléalimentation à destination des transpondeurs se trouvant dans le champ du terminal. Quand un transpondeur 2 se trouve dans le champ d'un terminal 1, une tension haute fréquence est engendrée aux bornes 21 et 23 du circuit résonant du transpondeur. Cette tension sert à fournir la tension d'alimentation des circuits électroniques 21 du transpondeur.

La figure 2 est un schéma bloc d'un mode de réalisation d'un terminal 1. Comme indiqué précédemment, le terminal comporte un circuit oscillant formé d'une inductance ou antenne L1 en série avec un élément capacitif C1 et un élément résistif R1. L'élément résistif est un élément de valeur réglable (CONTROLLABLE R1). Dans l'exemple de la figure 2, ces éléments sont connectés entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C et la masse 13. Cet élément de mesure 15 fait partie d'une boucle de régulation de phase qui sera décrite plus loin. L'amplificateur 14 reçoit un signal E de transmission haute fréquence issu d'un modulateur 16 (MOD) qui reçoit une fréquence de référence (signal OSC) par exemple d'un oscillateur à quartz (non représenté). Le modulateur 16 reçoit, si besoin, un signal Tx de données à transmettre et, en l'absence de transmission de données depuis le terminal, fournit la porteuse haute fréquence (par exemple 13,56 MHz) propre à téléalimenter un transpondeur. L'élément capacitif C1 est de préférence un élément à capacité variable et commandable par un signal CTRL. On réalise une régulation de phase du courant dans l'antenne L1 par rapport à un signal de référence. Cette régulation est une régulation du signal haute fréquence, c'est-à-dire du signal de la porteuse correspondant au signal E en l'absence de données à transmettre. La régulation est effectuée en faisant varier la capacité C1 du circuit oscillant du terminal de façon à maintenir le courant dans l'antenne L1 en relation de phase constante avec le signal de référence. Ce signal de référence correspond, par exemple, au signal OSC fourni par l'oscillateur au modulateur. Le signal CTRL est issu d'un circuit 17 (COMP) dont le rôle est de détecter l'écart de phase par rapport au signal de référence et de modifier en conséquence la capacité de l'élément C1. La mesure de phase est effectuée par exemple, à partir d'une mesure du courant I dans le circuit oscillant grâce à l'élément de mesure 15. Dans l'exemple représenté, cet élément est constitué d'un transformateur d'intensité comportant un enroulement primaire 151 entre l'élément C1 et la borne 13 de masse, et un enroulement secondaire 152 dont une première borne est connectée directement à la masse et dont l'autre borne fournit un signal MES indicateur du résultat de la mesure. Une résistance 153 de conversion courant-tension est connectée en parallèle avec l'enroulement secondaire 152. Le résultat de la mesure MES est envoyé au comparateur 17 qui asservit en conséquence la valeur de l'élément capacitif C1 au moyen du signal CTRL.

Dans le mode de réalisation illustré en figure 2, le comparateur 17 utilise le même démodulateur de phase (non représenté) que celui qui sert à démoduler le signal provenant du transpondeur et que reçoit éventuellement le circuit oscillant. Par conséquent, le comparateur 17 fournit un signal Rx restituant une rétromodulation éventuelle des données reçues d'un transpondeur à un bloc 18 symbolisant le reste des circuits électroniques du terminal.

Le temps de réponse de la boucle de régulation de phase est choisi suffisamment long pour ne pas gêner la rétromodulation éventuelle provenant d'un transpondeur, et suffisamment court devant la vitesse de passage d'un transpondeur dans le champ du terminal. On peut parler de régulation statique par rapport aux fréquences de modulation (par exemple, une fréquence de la porteuse de téléalimentation de 13,56 MHz et une fréquence de rétromodulation de 847,5 kHz utilisée pour transmettre des données du transpondeur vers la borne).

En variante au transformateur d'intensité de la figure 2, on pourra utiliser d'autres éléments de mesure du courant (par exemple, une résistance).

Un exemple de terminal à régulation de phase est décrit dans le document EP-A-0 857 981.

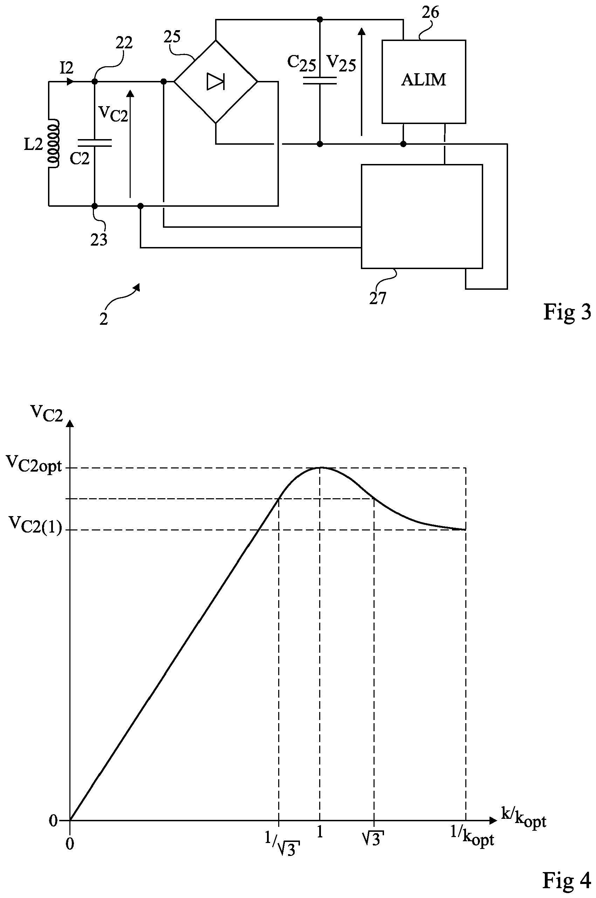

La figure 3 représente un mode de réalisation d'un transpondeur 2. Aux bornes 22 et 23 du circuit oscillant (inductance et antenne L2 et élément capacitif C2 en parallèle), est connecté un élément de redressement 25, par exemple un pont redresseur double alternance. Les sorties redressées du pont 25 sont reliées par un élément capacitif $C_{25}$ de lissage et fournissent une tension $V_{25}$ à un circuit 26 (ALIM) de gestion de l'alimentation du transpondeur. Le circuit 26 fournit aux autres circuits du transpondeur, symbolisés par un bloc 27, l'énergie nécessaire à leur fonctionnement. Les éléments 25, C25, 26 et 27 sont, en figure 1, inclus dans le bloc 21. Le circuit 27 prélève une information aux bornes 22 et 23 du circuit résonant pour être capable de démoduler les éventuelles informations reçues du terminal avant redressement. Par ailleurs, le circuit 27 comporte des éléments capacitifs et/ou résistifs non représentés, dits de rétromodulation, aptes à moduler la charge (LOAD) que constitue le transpondeur sur le champ généré par le terminal. Cette modification de charge se traduit, côté terminal, par une modification du courant ou de la tension de son circuit oscillant (en supposant que l'amplificateur ou coupleur d'antenne 14, figure 2, est adapté à fournir un courant constant). Cette modification de courant ou de tension, captée par le transformateur d'intensité (15, figure 2) ou par tout autre élément de mesure (par exemple la mesure de tension aux bornes de l'élément capacitif C1), permet au terminal de décoder les informations reçues du transpondeur.

Le fait que la phase soit régulée côté terminal permet d'exploiter des mesures de courant et de tension dans le circuit oscillant du terminal pour en déduire des informations relatives au couplage du transpondeur lorsqu'il est dans le champ de la borne.

Ces informations prennent en compte, notamment, le couplage entre le transpondeur et le terminal, c'est-à-dire le coefficient de couplage entre le circuit oscillant du terminal et celui du transpondeur. Ce coefficient de couplage dépend essentiellement de la distance séparant le transpondeur du terminal. Le coefficient de couplage, noté k, entre les circuits oscillants d'un transpondeur et d'un terminal est toujours compris entre 0 et 1.

Quand le transpondeur est posé contre le terminal, on considère que l'on est dans une position de couplage maximal. On ne peut en effet plus rapprocher davantage les antennes du transpondeur et du terminal sauf à supprimer le boîtier du terminal.

Il est par ailleurs désormais connu qu'il existe entre le terminal et le transpondeur une position de couplage optimum $k_{opt}$ qui correspond à la position à laquelle la tension $V_{C2}$ récupérée aux bornes du transpondeur (plus précisément de son antenne) est maximale. Cette position de couplage optimum ne correspond pas nécessairement à la position de couplage maximal.

La figure 4 représente un exemple d'allure de la tension $V_{C2}$ récupérée côté transpondeur en fonction du couplage normalisé $k/k_{opt}$.

La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour un coefficient de couplage $k_{opt}$ optimum ($k/k_{opt} = 1$), puis décroît vers une valeur intermédiaire $V_{C2(1)}$ atteinte au couplage 1. La position de couplage maximal se trouve à un endroit donné de cette courbe mais pas nécessairement à la position de couplage optimum. Cela dépend en particulier des différentes valeurs des éléments capacitifs et résistifs.

Deux autres points remarquables de la courbe de la figure 4 sont des points d'inflexion où le rapport $k/k_{opt}$ vaut respectivement $1/\sqrt{3}$ et $\sqrt{3}$, et où la tension $V_{C2}$ a la même valeur côté transpondeur.

Des relations exprimant la valeur de tension $V_{C2}$ en fonction du rapport du couplage courant sur le couplage optimum et reliant ces valeurs au courant I dans le circuit oscillant du terminal sont désormais habituelles. Par exemple, de telles relations sont données dans le document EP-A-2 114 019 (B8723 - 07-RO-225).

Selon les modes de réalisation décrits, on prévoit d'exploiter ces relations pour contraindre le porteur du transpondeur à se placer le plus près possible du terminal. L'objectif est alors d'éviter qu'un dispositif pirate, généralement plus volumineux ou de nature différente du transpondeur auquel est destiné le terminal ne vienne établir une communication avec le terminal en étant loin de celui-ci.

Un autre objectif est de rassurer le porteur du transpondeur. En effet, les applications ont souvent trait à des paiements ou à des authentifications. Le fait de ne permettre l'établissement d'une communication que lorsque le transpondeur est « posé » sur le terminal rassure l'utilisateur.

Pour cela, on prévoit de forcer l'utilisateur à placer le transpondeur dans une position de quasi contact (distance inférieure à 1 mm), de préférence en contact mécanique, avec le boîtier du terminal que ce soit en bougeant le terminal ou le transpondeur selon les cas. Ce boîtier comprend l'antenne de communication. Cela revient donc à forcer le transpondeur à être dans une position de couplage maximal avec son terminal. Pour cela, on autorise l'émission d'une requête à destination d'un transpondeur qu'à partir du moment où le terminal détecte cette position de couplage maximal. La notion de contact utilisée ici est un contact mécanique avec le boîtier du terminal, c'est-à-dire une position où les antennes du terminal et du transpondeur sont le plus proche possible l'une de l'autre. Il ne s'agit pas d'un contact électrique, la communication et la téléalimentation éventuelle du transpondeur s'effectuant toujours sans contact électrique.

La position qui correspond à un couplage nul (figure 4) correspond à une position du terminal à vide. Le courant I (figure 2) dans l'antenne ou le circuit oscillant du terminal a une valeur dite à vide, notée $I_V$ ou $I_{VIDE}$.

Cette valeur à vide correspond à la valeur alors qu'aucun transpondeur ne se trouve dans le champ du terminal.

Comme indiqué, par exemple dans le document EP-A-2 114 019 susmentionné, le rapport du couplage courant k sur le couplage optimum $k_{opt}$ est lié au courant à vide et à la valeur courante, notée I, du courant I par la relation :

$$(k/k_{opt})^2 = I_V/I - 1.$$

Cette relation peut également s'écrire :

$$I_V/I = (k/k_{opt})^2 + 1.$$

Dans la position de couplage optimum ($k = k_{opt}$), le courant, noté $I_{opt} = I_V/2$. De plus, il ressort de la formule ci-dessus que, lorsqu'on est en position de couplage optimum, le rapport $I_V/I = 2$.

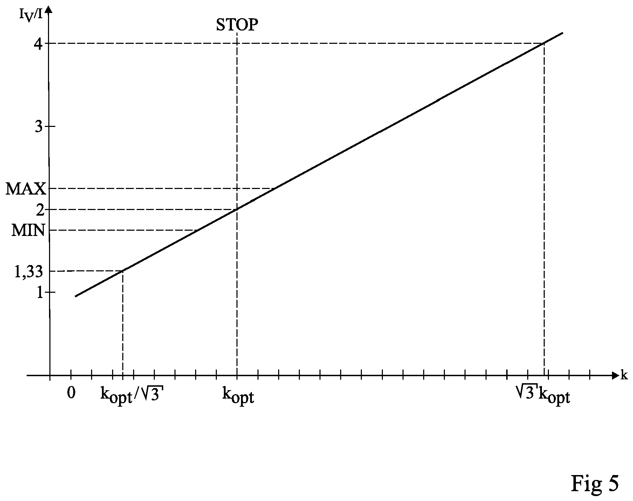

La figure 5 illustre l'allure du rapport $I_V/I$ en fonction du couplage k.

Cette allure est remarquable en ce qu'elle est linéaire depuis le couplage nul ($I_V/I = 1$) en passant par le point où le couplage optimum donne un rapport $I_V/I = 2$. Deux autres points remarquables apparaissent sur la courbe de la figure 5. Il s'agit des points d'inflexions dans la courbe de la figure 4. Aux positions correspondant à ces points d'inflexion, cela se traduit, côté terminal, par un rapport du courant $I_V/I$ valant respectivement 1,33

$$(k = k_{opt} / \sqrt{3}) \text{ et } 4 \, (k = \sqrt{3} \cdot k_{opt}).$$

On sait également que la valeur $V_{C2max}$ est atteinte pour une valeur du couplage courant k, soit inférieure, soit supérieure au couplage optimum.

Ainsi, la mesure du courant I et la connaissance du courant à vide $I_V$ suffisent pour déterminer le couplage courant k par rapport au couplage optimum $k_{opt}$.

On notera que lorsque l'on parle de la mesure du courant I, on considère l'obtention d'une information représentative de ce courant I. Toutefois, une mesure du courant est préférée par rapport à une mesure de tension plus difficile à comparer.

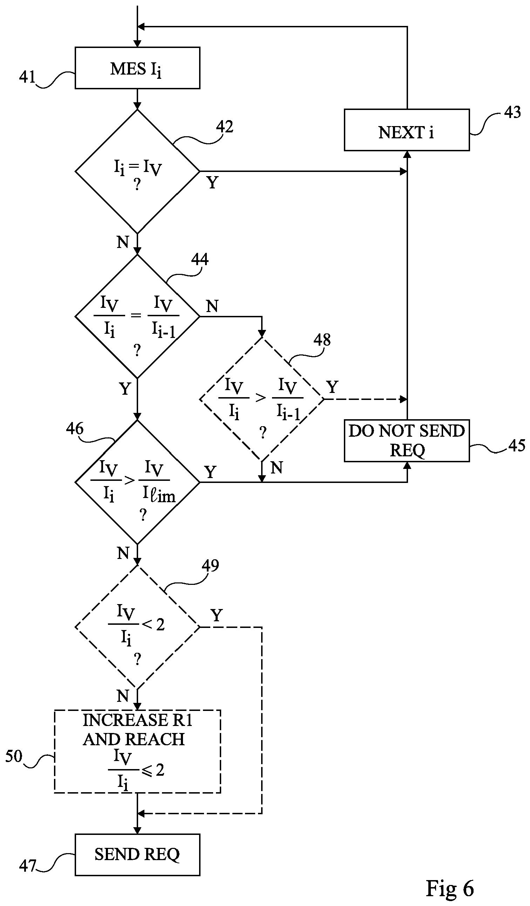

La figure 6 est un organigramme simplifié d'un mode de mise en oeuvre du procédé de sécurisation de transaction.

De façon périodique, le terminal mesure (bloc 41, MES $I_i$) la valeur courante du courant I dans son circuit oscillant. La périodicité de la mesure est choisie pour être la plus courte possible tout en restant compatible avec le temps nécessaire à l'exploitation des mesures (à l'exécution du procédé entre deux mesures). Après chaque mesure, on compare (bloc 42, $I_i = I_V$ ?) la valeur courante par rapport à la valeur à vide mémorisée alors qu'aucun transpondeur n'est présent dans le champ du terminal. Une telle mémorisation s'effectue par exemple dans une phase d'initialisation du terminal.

Si la valeur courante est égale à la valeur à vide (sortie Y du bloc 42), cela signifie qu'aucun transpondeur n'est présent dans le champ et on passe à une itération suivante des mesures (bloc 43, NEXT$_i$). Si la valeur courante est différente de la valeur à vide (sortie N du bloc 42), cela signifie qu'un élément se trouve en face du terminal. On ne sait toutefois pas pour l'instant pas s'il s'agit d'un transpondeur autorisé ou d'un dispositif pirate, ni l'éloignement entre le transpondeur et le terminal.

On calcule alors le rapport entre la valeur à vide du courant $I_v$ et la valeur courante $I_i$ et on compare ce rapport au rapport ($I_v/I_{i-1}$) calculé lors de l'itération précédente (bloc 44, $I_v/I_i = I_v/I_{i-1}$ ?) et mémorisé. Ce test revient à déterminer si la distance entre le transpondeur et le terminal varie.

Si la distance varie (sortie N du bloc 44), c'est-à-dire que l'utilisateur bouge l'un des deux éléments par rapport à l'autre, le transpondeur ne peut pas être en contact avec le terminal. On interdit alors (bloc 45, DO NOT SEND REQ) l'envoi d'une requête d'interrogation par le terminal à destination du transpondeur et on boucle sur une mesure suivante (bloc 43).

Habituellement, un terminal envoie périodiquement et en permanence des requêtes d'interrogation à destination d'éventuels transpondeurs présents dans son champ. Ici, on restreint cet envoi de requêtes pour ne les envoyer qu'une fois qu'on sait qu'un transpondeur a priori autorisé est dans le champ.

Si la distance ne varie plus (sortie Y du bloc 44), on compare alors (bloc 46, $I_v/I_i > I_v/I_{lim}$ ?) le rapport courant par rapport à un rapport avec un courant limite $I_v/I_{lim}$. La valeur limite $I_{lim}$ correspond à une valeur connue pour un terminal donné susceptible de fonctionner avec une famille de transpondeurs pour laquelle il est prévu. La valeur du courant limite $I_{lim}$ est déterminée, par exemple à la conception du terminal ou dans une phase de configuration initiale. L'objectif est de déterminer et de mémoriser le courant au couplage maximal avec un type de transpondeur autorisé. Le cas échéant, plusieurs valeurs de courant limite sont mémorisées pour autoriser plusieurs types de transpondeurs.

Si le rapport courant est supérieur au rapport avec le courant limite (sortie Y du bloc 46), cela signifie que le couplage courant est supérieur au couplage maximal. Il est donc possible que l'on soit en face d'un dispositif pirate et on rejoint l'entrée du bloc 45 interdisant l'envoi d'une requête.

Dans le cas contraire (sortie N du bloc 46) et selon un mode de réalisation simplifié, on considère qu'un transpondeur autorisé est posé contre le lecteur et qu'il ne s'agit pas d'un dispositif pirate. On autorise alors (bloc 47, SEND REQ) l'envoi d'une requête par le terminal.

Selon une première variante optionnelle illustrée en pointillés, tant que le transpondeur n'est pas en butée (sortie N du bloc 44), on regarde si le rapport courant est supérieur au rapport précédent (bloc 48, $I_v/I_i > I_v/I_{i-1}$ ?). Dans l'affirmative (sortie Y du bloc 48), cela signifie que la carte est en train de se rapprocher et on passe à l'étape 43. Dans la négative (sortie N du bloc 48), cela signifie que la carte s'écarte et avant de repasser à l'itération suivante, on interdit l'envoi de requêtes (bloc 45).

Interdire/autoriser l'envoi d'une ou plusieurs requêtes revient, dans une réalisation simple, à modifier l'état d'un bit (drapeau) conditionnant l'envoi des requêtes REQ. En variante, l'étape 45 peut être omise en ce sens qu'il n'y a pas alors à proprement parler de procédure d'interdiction. Simplement, le terminal ne passe dans un processus d'interrogation (envoi de requêtes) que si un transpondeur autorisé et en contact est détecté.

Selon une autre variante optionnelle, on exploite les relations entre le couplage et le courant dans le circuit oscillant du terminal pour, si possible, faire coïncider le couplage maximal avec le couplage optimum et optimiser ainsi la sécurité de la communication. En effet, cela impose un point de fonctionnement tel que, dès que le transpondeur s'écarte, cela se traduit par une diminution de la tension récupérée.

Selon cette variante illustrée en pointillés en figure 6, une fois que les tests 44 et 46 ont validé que l'on est dans la position de couplage maximal, on compare (bloc 49, $I_v/I < 2$ ?) la valeur courante du rapport ($I_v/I$) par rapport à 2, c'est-à-dire par rapport à la position de couplage optimum. Si la position courante est inférieure à la position de couplage optimum (sortie Y du bloc 49), cela signifie que le couplage optimum ne peut pas être atteint. En effet, la résistance R1 est préférentiellement, lors de l'initialisation, à sa valeur minimale, et on ne peut plus en augmenter la valeur sans nuire à d'autres aspects fonctionnels du système. On envoie alors la requête (bloc 47, SEND REQ).

Dans le cas contraire (sortie N du bloc 49), on provoque (bloc 50, INCREASE R1 AND REACH $I_v/I <=$ 2) une variation de la résistance R1 du circuit oscillant du terminal jusqu'à ce que le couplage maximal soit inférieur ou égal au couplage optimum. Un tel réglage optionnel est en lui-même connu (voir le document susmentionné). Cela permet de s'assurer alors que la tension de téléalimentation du transpondeur ne puisse que diminuer de manière monotone et décroissante si le transpondeur s'écarte. La communication sera alors rapidement coupée si le transpondeur s'écarte et on évite ainsi l'interposition d'un dispositif pirate entre le terminal et le transpondeur, même une fois que la communication a été initiée. La limite est toutefois choisie pour qu'elle maintienne la possibilité d'un transfert d'énergie sans contact suffisant pour que les circuits du transpondeur soient correctement alimentés.

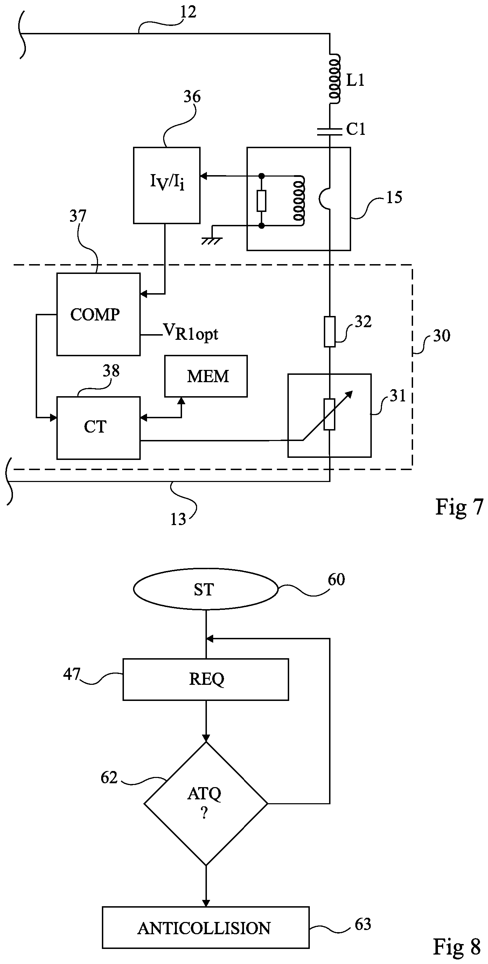

La figure 7 est un schéma bloc à rapprocher de celui de la figure 2 illustrant partiellement un mode de réalisation d'un circuit 30 (contrôlable R1) de variation de la valeur de la résistance R1. Dans cet exemple, une résistance variable 31 est connectée en série avec une résistance fixe 32, les deux résistances 31 et 32 forment l'élément résistif courant du terminal.

Le transformateur d'intensité 15 mesure le courant $I_i$ et fournit une mesure à un circuit 36 qui calcule le rapport $I_v/I_i$. La valeur de ce rapport est ensuite comparée par un circuit de comparaison 37 (COMP) par rapport à une valeur de consigne $(I_v/I)$cons qui peut être inférieure ou égale à 2 d'après la deuxième variante de la figure 6.

Le résultat fourni par le comparateur 37 sert à asservir la valeur de l'élément résistif 31 sur la valeur de consigne grâce à un circuit de commande 38 (CT). Les autres éléments du terminal sont identiques à ceux décrits en relation avec la figure 2. Toutefois, dans l'exemple de la figure 7, le circuit 30 est placé côté borne de masse 13 plutôt que côté borne 12 de sortie de l'amplificateur 14 (non représenté en figure 7). Le transformateur d'intensité 15 servant à la mesure et pour l'asservissement en phase est intercalé entre l'élément capacitif C1 et le circuit 30. La capacité C1 est de préférence également variable bien que cela n'ait pas été illustré en figure 7.

Un exemple de circuit à résistance commutable utilisable pour la mise en oeuvre de la sélection résistive de la valeur de la résistance R1 est décrit par exemple dans le document déjà mentionné.

La figure 8 illustre un mécanisme d'envoi de requêtes REQ par un terminal à destination d'un transpondeur. Ce mécanisme, en lui-même usuel, est habituellement mis en oeuvre en permanence dans un terminal mais est, selon les modes de réalisation décrits, mis en oeuvre uniquement au bloc 47.

Dès qu'il est mis sous tension et en fonctionnement, le terminal de lecture-écriture de transpondeur débute (bloc 60, ST) après une phase d'allumage, d'initialisation et de test, une procédure de veille pendant laquelle il attend l'établissement d'une communication avec au moins un transpondeur. Cette procédure consiste, essentiellement, à envoyer (bloc 47) périodiquement une séquence d'interrogation (REQ) à destination des transpondeurs éventuellement présents dans le champ de la borne. Par la mise en oeuvre du mode de réalisation de la figure 6, cet envoi de requête 47 n'est effectué qu'une fois validé que le transpondeur est en contact avec la borne. Après chaque envoi de requête d'interrogation 47, le lecteur surveille (bloc 62, ATQ ?) la réception par son démodulateur d'un message de réponse ATQ provenant d'un transpondeur entré dans son champ. En l'absence de réponse, le lecteur se met en boucle sur l'envoi d'une interrogation 47. Lorsqu'il reçoit une réponse ATQ, il passe alors dans un mode de vérification que le transpondeur est bien un transpondeur qui lui est destiné ainsi que dans un mode éventuel d'anticollision (bloc 63) pour individualiser les transpondeurs dans son champ.

Divers modes de réalisation ont été décrits, diverses variantes et modifications apparaîtront à l'homme de l'art. En particulier, les dimensions à donner aux résistances dans la mise en oeuvre des variantes et les valeurs des courants limites et des différents seuils, ainsi que la périodicité des mesures et itérations, dépendent de l'application et plus particulièrement de la famille de transpondeurs à laquelle est dédié un terminal donné. De plus, les relations d'inégalité pourront correspondre à des inégalités strictes ou larges. En outre, la mise en oeuvre pratique de l'invention est à la portée de l'homme du métier à partir des indications fonctionnelles données ci-dessus en utilisant les outils matériels et logiciels habituellement présents dans les terminaux. On notera que la mise en oeuvre de ces modes de réalisation ne requiert aucune modification du transpondeur et ne s'effectue que côté lecteur.

**Revendications**

1. Procédé de sécurisation d'une communication entre un transpondeur électromagnétique (2) et un terminal (1), dans lequel l'émission (47) d'une requête d'interrogation (REQ) par le terminal n'est autorisée que lorsque le transpondeur est en contact mécanique ou en quasi contact mécanique avec un boîtier du terminal, le boîtier incluant une antenne de communication, dans lequel :

   a) une première valeur $(I_i)$ du courant (I) dans un circuit oscillant du terminal (1) est périodiquement mesurée ;
   b) une deuxième valeur $(I_v/I_i)$ d'un rapport entre une valeur à vide $(I_v)$ de ce courant, mémorisée lorsqu'aucun transpondeur n'est dans le champ du terminal, et la première valeur est calculée ;
   c) ladite deuxième valeur est comparée (44) à une troisième valeur $(I_v/I_{i-1})$ dudit rapport calculée lors d'une itération précédente ; et
   d) tant que les deuxième et troisième valeurs ne sont pas égales, on réitère les étapes a à c.

2. Procédé selon la revendication 1, dans lequel en cas d'égalité des deuxième et troisième valeurs :

   e) la deuxième valeur $(I_v/I_i)$ est comparée (46) à un seuil $(I_v/I_{lim})$ ;
   f) l'envoi (47) d'une requête est autorisé si ce seuil n'est pas atteint ;
   g) on revient à l'étape a) si ce seuil est dépassé.

3. Procédé selon la revendication 2, dans lequel si ledit seuil $(I_v/I_{lim})$ est atteint, l'envoi de la requête est précédé d'une augmentation (50) de la valeur d'un élément résistif (R1) du circuit oscillant si la deuxième valeur $(I_v/I_i)$ est supérieure à 2.

4. Procédé selon l'une quelconque des revendications 1 à 3, dans lequel si la deuxième valeur $(I_v/I_i)$ est inférieure à la troisième $(I_v/I_{i-1})$, on bloque l'émission éventuelle d'une requête.

5. Procédé selon l'une quelconque des revendications 1 à 4, dans lequel :

> l'étape b) est précédée d'une comparaison (42) de la première valeur à la valeur à vide ; et en cas d'identité, on revient à l'étape a), ou dans le cas contraire, on passe à l'étape c).

**6.** Terminal de communication avec un transpondeur électromagnétique, comportant des moyens adaptés à la mise en oeuvre du procédé conforme à l'une quelconque des revendications précédentes.

**7.** Téléphone mobile comportant un terminal selon la revendication 6.

**Patentansprüche**

**1.** Verfahren zum Schützen einer Kommunikation zwischen einem elektromagnetischen Transponder (2) und einem Endgerät (1), wobei das Senden (47) einer Sendeabruf-Anforderung (REQ) durch das Endgerät nur gestattet wird, wenn sich der Transponder in mechanischem Kontakt oder in quasi-mechanischem Kontakt mit einem Endgerät-Gehäuse befindet, wobei das Gehäuse eine Kommunikationsantenne aufweist, wobei:

> a) ein erster Wert ($I_i$) des Stroms (I) in einer oszillierenden Schaltung des Endgeräts (1) periodisch gemessen wird;
> b) ein zweiter Wert ($I_v/I_i$) eines Verhältnisses zwischen einem lastfreien Wert ($I_v$) des Stroms, der gespeichert wird, wenn sich kein Transponder im Feld des Endgeräts befindet, und dem ersten Wert berechnet wird;
> c) der zweite Wert mit einem dritten Wert ($I_v/I_{i-1}$) des Verhältnisses, der in einer vorherigen Iteration berechnet wurde, verglichen wird (44); und
> d) die Schritte a bis c wiederholt werden, solange der zweite und dritte Wert nicht gleich sind.

**2.** Verfahren nach Anspruch 1, wobei, falls der zweite und dritte Wert gleich sind:

> e) der zweite Wert ($I_v/I_i$) mit einem Schwellenwert ($I_v/I_{lim}$) verglichen wird (46);
> f) das Senden (47) einer Anforderung gestattet wird, wenn dieser Schwellenwert nicht erreicht wurde;
> g) es zum Schritt a) zurückgeht, wenn der Schwellenwert überschritten wurde.

**3.** Verfahren nach Anspruch 2, wobei, wenn der Schwellenwert ($I_v/I_{lim}$) erreicht wurde, dem Senden der Anforderung eine Erhöhung (50) des Wertes eines Widerstandselements (R1) der oszillierenden Schaltung vorausgeht, wenn der zweite Wert ($I_v/I_i$)

größer als 2 ist.

**4.** Verfahren nach einem der Ansprüche 1 bis 3, worin, wenn der zweite Wert ($I_v/I_i$) kleiner ist als der dritte ($I_v/I_{i-1}$), die mögliche Übertragung einer Anforderung blockiert wird.

**5.** Verfahren nach einem der Ansprüche 1 bis 4, wobei:

> dem Schritt b) ein Vergleich (42) des ersten Wertes mit dem lastfreien Wert vorausgeht; und es im Falle einer Gleichheit zum Schritt a) zurückgeht, oder es im anderen Fall zum Schritt c) geht.

**6.** Endgerät zur Kommunikation mit einem elektromagnetischen Transponder, aufweisend Mittel, die in der Lage sind, das Verfahren nach einem der vorangehenden Ansprüche zu implementieren.

**7.** Mobiltelefon, aufweisend das Endgerät nach Anspruch 6.

**Claims**

**1.** A method for protecting a communication between an electromagnetic transponder (2) and a terminal (1), wherein the transmission (47) of a polling request (REQ) by the terminal is only allowed when the transponder is in mechanical contact or in quasi-mechanical contact with a terminal package, the package including a communication antenna, wherein:

> a) a first value ($I_i$) of the current (I) in an oscillating circuit of the terminal (1) is periodically measured;
> b) a second value ($I_v/I_i$) of a ratio between a noload value ($I_v$) of this current, stored when no transponder is in the field of the terminal, and the first value, is calculated;
> c) said second value is compared (44) with a third value ($I_v/I_{i-1}$) of said ratio calculated in a previous iteration; and
> d) as long as the second and third values are not equal, steps a to c are repeated.

**2.** The method of claim 1, wherein, in case the second and third values are equal:

> e) the second value ($I_v/I_i$) is compared (46) with a threshold ($I_v/I_{lim}$);
> f) the sending (47) of a request is allowed if this threshold has not been reached;
> g) it is returned to step a) if this threshold has been exceeded.

**3.** The method of claim 2, wherein if said threshold

$(I_V/I_{lim})$ has been reached, the sending of the request is preceded by an increase (50) in the value of a resistive element (R1) of the oscillating circuit if the second value $(I_V/I_i)$ is greater than 2.

4. The method of any of claims 1 to 3, wherein if the second value $(I_V/I_i)$ is smaller than the third one $(I_V/I_{i-1})$, the possible transmission of a request is blocked.

5. The method of any of claims 1 to 4, wherein:

> step b) is preceded by a comparison (42) of the first value with the no-load value; and
> in case of an identity, it is returned to step a), or in the opposite case, it is proceeded to step c).

6. A terminal for communicating with an electromagnetic transponder, comprising means capable of implementing the method of any of the foregoing claims.

7. A cell phone comprising the terminal of claim 6.

Fig 1

Fig 2

Fig 3

Fig 4

Fig 5

Fig 6

Fig 7

Fig 8

**RÉFÉRENCES CITÉES DANS LA DESCRIPTION**

**Documents brevets cités dans la description**

- GB 2464362 A
- EP 2077518 A
- WO 2005124669 A2
- EP 1043679 A1
- EP 0857981 A
- EP 2114019 A